(19)

**Europäisches Patentamt**
**European Patent Office**
**Office européen des brevets**

(11) **EP 4 672 041 A1**

(12) **EUROPEAN PATENT APPLICATION**

(43) Date of publication:
31.12.2025 Bulletin 2026/01

(21) Application number: 25184255.5

(22) Date of filing: 20.06.2025

(51) International Patent Classification (IPC):
*G06F 18/23* (2023.01)     *G06V 10/762* (2022.01)
*G06V 10/82* (2022.01)

(52) Cooperative Patent Classification (CPC):
*G06V 10/82; G06F 18/23; G06V 10/763;*
G06F 18/24147; G06V 10/765

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 27.06.2024 IN 202421049444

(71) Applicant: **Tata Consultancy Services Limited**
**Mumbai, Maharashtra 400 021 (IN)**

(72) Inventors:
• **SRIVASTAVA, Vivek**
**110001 New Delhi, Delhi (IN)**
• **DANGETI, Abhishek**
**500034 Hyderabad, Telangana (IN)**
• **JAMWAL, Vikram**
**411028 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR STYLE BASED CLUSTERING OF ARTWORKS WITH NATURAL LANGUAGE STYLE ANNOTATIONS**

(57)     This disclosure relates generally to a system and method for style-based clustering of artworks with natural language style annotations. The conventional methods generate generic image feature representations derived from deep neural networks and do not specifically deal with the artistic style. The present disclosure, generates style-based artwork representations based on caption with style-based keywords and style concept annotations by leveraging image captioning model, vision language model and text encoder. Further style-based latent feature representations are generated from the style-based artwork representations for performing unsupervised clustering. The clustering of style-based latent feature representations is done based on deep embedded clustering using dynamic or static initialization of clusters. The present disclosure helps in discovering finer-grained style concepts within a corpus of artwork in an unsupervised manner. It also helps explore and create the art style evolution-based narratives and curative practices.

FIG. 2

EP 4 672 041 A1

**Description**

CROSS-REFERENCE TO RELATED APPLICATIONS AND PRIORITY

The present application claims priority from Indian provisional application no. 202421049444, filed on Jun 27, 2024.

TECHNICAL FIELD

The disclosure herein generally relates to unsupervised learning in Artificial Neural Networks (ANNs), and, more particularly, to a method and system for style-based clustering of artworks with natural language style annotations.

BACKGROUND

The artworks produced by various artists, during human history, have been categorized into (or labeled as) various art movements and styles such as renaissance, classicism, cubism, expressionism, abstract, baroque, modern, futurism, etc. based on the medium and philosophy of expression. However, it is observed that there are a higher diversity of styles, sub-styles, or categories that can be more granular than those covered by these art movements. Moreover, individual artists do not draw in a singular style and their art evolves depending upon their exposure, circumstances, and changing tastes. The digitization of such artworks through platforms such as WikiArt and the Munch Museum's digital archive facilitates a deeper study of these artworks through modern artificial intelligence methods.
Several attempts have been made to analyze and understand artistic styles through methods such as style-based classification of artworks. A majority of the current artwork classification methods classify artworks based on art movements. However, due to the lack of labeled data, the artistic style-based clustering of artworks is an unexplored task. Alternatively, by using pattern recognition methods like unsupervised clustering, artworks with some similar characteristics can be identified. This approach aids in gaining a deeper understanding of an artist's various stylistic expressions, allowing for a more accessible analysis of artistic evolution. Only a handful of prior works have delved into unsupervised clustering of artworks. However, none of these approaches specifically targets the style-level clustering of the artworks.

SUMMARY

Embodiments of the present disclosure present technological improvements as solutions to one or more of the above-mentioned technical problems recognized by the inventors in conventional systems. For example, in one embodiment, a method for style-based clustering of artworks with natural language style annotations is provided. The method includes generating a set of style-based artwork representations for each artwork amongst the plurality of artworks based on at least one of (i) a caption with a plurality of style keywords, or (ii) a plurality of style concepts associated with each artwork. Further, the method includes, generating a set of latent embedded features corresponding to each artwork using an autoencoder from the set of style-based artwork representations. Finally, the method includes, clustering the set of latent embedded features corresponding to each artwork based on a deep embedded clustering with cluster initialization technique, to obtain a plurality of style clusters, wherein each artwork amongst the plurality of artworks is associated with each style cluster amongst the plurality of style clusters.
**In** another aspect, a system for style-based clustering of artworks with natural language style annotations is provided. The system comprises memory storing instructions; one or more communication interfaces; and one or more hardware processors coupled to the memory via the one or more communication interfaces, wherein the one or more hardware processors are configured by the instructions to generate a set of style-based artwork representations for each artwork amongst the plurality of artworks based on at least one of (i) a caption with a plurality of style keywords, or (ii) a plurality of style concepts associated with each artwork. Further, the system includes, generating a set of latent embedded features corresponding to each artwork using an autoencoder from the set of style-based artwork representations. Finally, the system includes, clustering the set of latent embedded features corresponding to each artwork based on a deep embedded clustering with cluster initialization technique, to obtain a plurality of style clusters, wherein each artwork amongst the plurality of artworks is associated with each style cluster amongst the plurality of style clusters.
The set of style-based artwork representations based on the caption with the plurality of style keywords for each artwork are generated initially by generating the caption comprising the plurality of style keywords, associated with the artwork using an image captioning model. And further encoding the caption using a text encoder to obtain the set of style-based artwork representations.
The set of style-based artwork representations based on the plurality of style concepts for each artwork are generated initially by annotating the artwork using the plurality of style concepts utilizing a vision language model. And then further encoding the annotated artwork using the text encoder to obtain the set of style-based artwork representations.

Each style concept is associated with at least one visual element amongst a plurality of visual elements. Each visual element corresponds to any one of (i) a subject, (ii) a line, (iii) a texture, (iv) a color, (v) a shape, (vi) a light and space, or (vii) a set of general principles of art.

In yet another aspect, there is provided a computer program product comprising a non-transitory computer readable medium having a computer readable program embodied therein, wherein the computer readable program, when executed on a computing device causes the computing device for style-based clustering of artworks with natural language style annotations by generating a set of style-based artwork representations for each artwork amongst the plurality of artworks based on at least one of (i) a caption with a plurality of style keywords, or (ii) a plurality of style concepts associated with each artwork. Further, the computer readable program includes, generating a set of latent embedded features corresponding to each artwork using an autoencoder from the set of style-based artwork representations. Finally, the computer readable program includes, clustering the set of latent embedded features corresponding to each artwork based on a deep embedded clustering with cluster initialization technique, to obtain a plurality of style clusters, wherein each artwork amongst the plurality of artworks is associated with each style cluster amongst the plurality of style clusters.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for style-based clustering of artworks with natural language style annotations according to some embodiments of the present disclosure.

FIG. 2 is a functional block diagram of the system for style-based clustering of artworks with natural language style annotations in accordance with some embodiments of the present disclosure.

FIG. 3 is an exemplary flow diagram illustrating a method for style-based clustering of artworks with natural language style annotations according to some embodiments of the present disclosure.

FIG. 4A is a block diagram for generating style-based artwork representations based on artwork caption according to some embodiments of the present disclosure.

FIG. 4B is a block diagram for generating style-based artwork representations based on artwork style concept annotation in accordance with some embodiments of the present disclosure.

FIG. 5A through FIG. 5D, collectively referred as FIG. 5, illustrates artworks and corresponding captions generated using an image captioning model in accordance with some embodiments of the present disclosure.

FIG. 6A through FIG. 6B, collectively referred as FIG. 6, illustrates artworks used for artwork style concept annotation using a vision language model in accordance with some embodiments of the present disclosure.

FIG. 7A through FIG. 7D, collectively referred as FIG. 7, illustrates experimental results for $F_{dense}$, $F_{caption}$ and $F_{annotation}$ with various artwork datasets, in accordance with some embodiments of the present disclosure.

FIG. 8A through FIG. 8B, collectively referred as FIG. 8, illustrates experimental results for $F_{dense}$, $F_{caption}$ and $F_{annotation}$ with dynamic cluster initialization technique and k-means cluster initialization in accordance with some embodiments of the present disclosure.

FIG. 9A through FIG. 9B, collectively referred as FIG. 9, illustrates experimental results of random samples from a few clusters obtained from various artwork datasets in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Several deep learning approaches are applied to artworks for artwork classification, artwork retrieval, artwork clustering, artwork generation and so on. Several methods based on handcrafted features such as color and brushstroke have been explored to classify artworks. However, these approaches are limited by the quality of the handcrafted features. Recently, neural network-based architectures such as Convolutional Neural Networks (CNNs) have been used to extract features from the artworks which are further used in artwork classification tasks. These classification methods are majorly approached with a supervised learning setup with access to artwork class label to train the models. To facilitate training such supervised models, the datasets such as WikiArt, SemArt, and Pandora18k has been extensively used across experiments. These datasets are focused towards artists, genre, and art movements-based artwork categorization.

Hence, the majority of artwork classification studies are limited to predicting the artist or the popular art movement in the history.

Most of the artwork retrieval methods leverage the content similarity to retrieve the artwork from a collection. For instance, monochromatic painting images are retrieved using query consisting of combination of classes or keywords, whereas another prior work fine-tunes a pre-trained CNN to retrieve paintings with similar artistic motifs given a textual user query. In contrast to retrieving artwork from textual queries, retrieving paintings from the given image(s) is also explored.

At present several novel clustering algorithms has been proposed in computer vision spanning across supervised, semi-supervised, and unsupervised approaches. Recently, a prior work has explored the problem of clustering artworks leveraging the artwork features extracted with deep convolutional neural networks such as DenseNet. With the advent of powerful image generation and style transfer methods, there are models that can generate and capture the various elements of artistic style. Recently, techniques such as diffusion models and generative adversarial networks has facilitated models to generate high quality images in the style of artwork or an artist. Such techniques along with the co-creation capability enable the artists to diversify their style palette which further underlines the importance of style-based clustering of artworks.

Clustering is fundamental to many data-centric applications. The choice of feature space impacts the overall performance of the clustering algorithms. The importance of the appropriate selection of the feature space increases multi-fold in the case of unsupervised clustering due to the lack of labelled data which can help reduce the impact of feature space with the supervision provided with the class labels. The present disclosure provides artwork feature representations for unsupervised clustering of artworks based on artistic style. The artwork feature representations are style-based feature representations of the artwork which are further used with an existing unsupervised clustering method, i.e., a deep embedded clustering. Visual feature extraction from an image is not same as the style representation obtained from the artwork images. These visual features from the image do not capture the fine-granular style information available in the artwork images. Style representation obtained from the artwork image encode a lot of information in their latent representation about edges, shapes, spatial information, etc. Disentangling style specific information from these features is technically challenging.

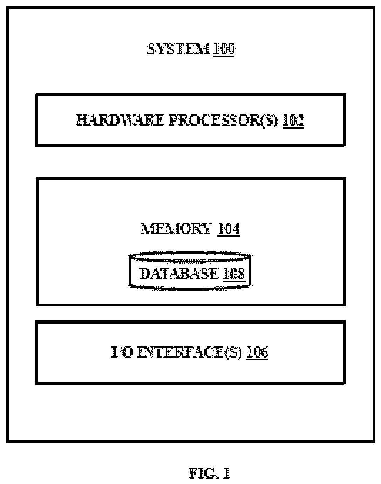

Referring now to the drawings, and more particularly to FIG. 1 through FIG. 9B, where similar reference characters denote corresponding features consistently throughout the figures, there are shown preferred embodiments and these embodiments are described in the context of the following exemplary system and/or method.

FIG. 1 illustrates an exemplary block diagram of a system 100 configured for style-based clustering of artworks with natural language style annotations according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

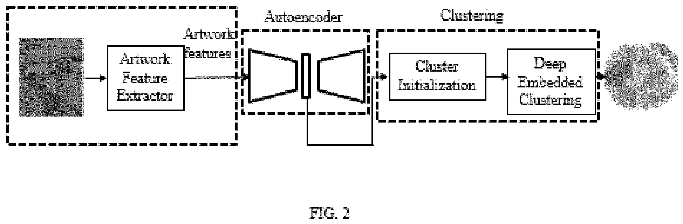

In an embodiment, the memory 104 includes a plurality of modules, as depicted in FIG. 2, such as an artwork feature extractor module, an autoencoder, a clustering module and the like. The plurality of modules includes programs or coded instructions that supplement applications or functions performed by the system 100 for executing different steps involved in the process for style-based clustering being performed by the system 100. Further, the plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules (not shown).

Further, the memory 104 may include a database 108 or repository. The memory 104 may comprise information pertaining to input(s)/output(s) of each step performed by the processor(s) 102 of the system 100 and methods of the present disclosure. In an embodiment, the database 108 may be external (not shown) to the system 100 and coupled via the I/O interface 106. The database 108 may store a dataset comprising artwork images, clustering data and the like.

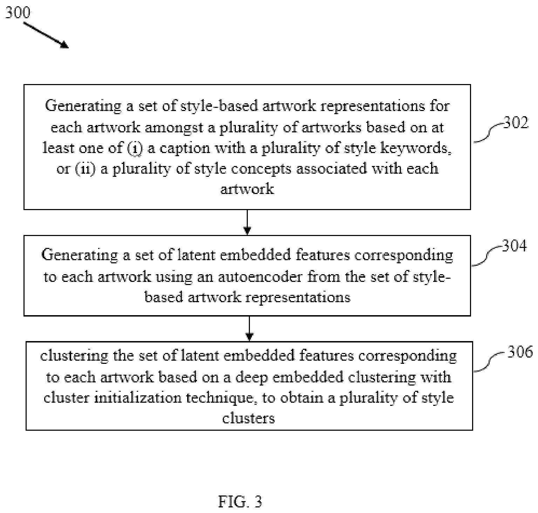

FIG. 2 is a functional block diagram of the system 100 for style-based clustering of artworks with natural language style annotations in accordance with some embodiments of the present disclosure. Referring to FIG. 2, artwork feature extractor receives artworks for clustering and extracts artwork features which is referred as style-based artwork representation. Further these artwork features are provided to an autoencoder to generate latent embedded features corresponding to the artwork features. These latent embedded features are further used for clustering using a deep embedded clustering to cluster the artwork. A detailed explanation on the working of FIG. 2 is provided in FIG. 3 using steps 302 through 306.

FIG. 3 is an exemplary flow diagram illustrating a method 300 for style-based clustering of artworks with natural language style annotations according to some embodiments of the present disclosure. In an embodiment, the system 100 comprises one or more data storage devices or the memory 104 operatively coupled to the one or more hardware processor(s) 102 and is configured to store instructions for execution of steps of the method 300 by the processor(s) or one or more hardware processors 102. The steps of the method 300 of the present disclosure will now be explained with reference to the components or blocks of the system 100 as depicted in FIG. 1 and the steps of flow diagram as depicted in FIG. 3. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof.

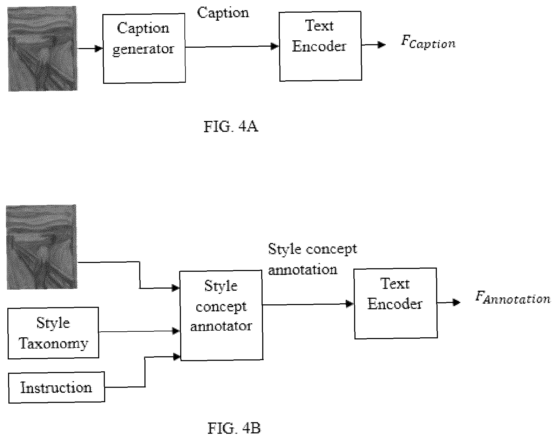

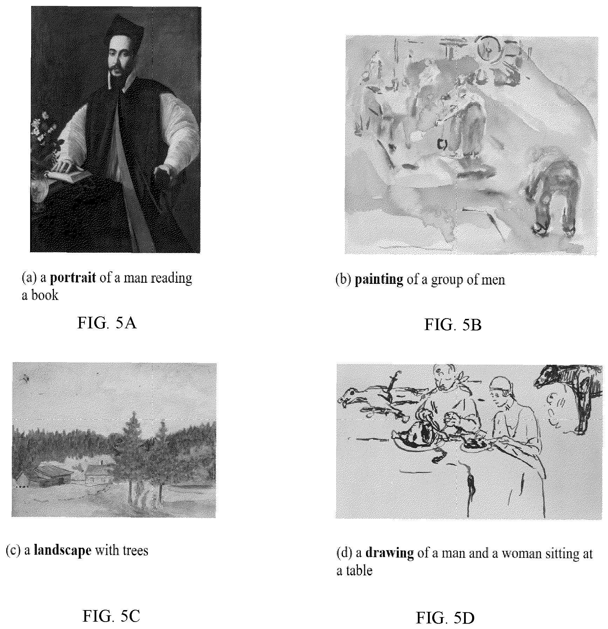

Now referring to FIG. 3, at step 302 of the method 300, the one or more hardware processors are configured to generate a set of style-based artwork representations for each artwork amongst a plurality of artworks. The plurality of artworks may be received from an artwork dataset stored in a database in the memory of the system 100. There are many publicly available artwork datasets containing plurality of artworks such as WikiArt dataset, Edvard Munch archive and the like. The set of style-based artwork representations are generated based on either of two approaches such as (i) a caption with a plurality of style keywords, or (ii) a plurality of style concepts associated with each artwork. These two approaches are used for style-based clustering that explicitly factor in the artistic style information from the artworks. The first approach of generating the set of style-based artwork representations using caption is depicted as a block diagram in FIG. 4A. In the first approach, the set of style-based artwork representations are generated using a natural language text description of the artwork. The natural language text description of the artwork encloses the content as well as the coarse- grained style information. A caption is generated for each artwork of the plurality of artworks using an image captioning model. Generic image captioning models such as Llava, Bootstrapping Language-Image Pre-training for Unified Vision- Visual Question Answering (BLIP-vqa), contrastive language-image pretraining (CLIP) may be used for generating caption. Further the caption is encoded using a text encoder to obtain the set of style-based artwork representations. Any text encoder models such as Bidirectional Encoder Representations from Transformers (BERT), Generative pre-trained transformers (GPT), Generalized Autoregressive Pretraining for Language Understanding (XLNET), CLIP may be used as the text encoder. FIG. 5A, 5B, 5C and 5D, collectively referred as FIG. 5, illustrates example artworks and corresponding captions generated using an image captioning model in accordance with some embodiments of the present disclosure. As an example, in FIG. 5A, the caption generated is "a **portrait** of a man reading a book", where portrait is the style keyword. Thus, the coarse-grained style information in the text description is depicted with the keywords such as painting, drawing, portrait, and so on for each artwork. The generation of the set of style-based artwork representations for the artwork $a_i$ using caption is represented as,

$$F_{caption} = T(C(a_i)) \hspace{3cm} (1)$$

where C is the caption generator and T is the text encoder to encode the caption for the artwork $a_i$.

In an embodiment, a Bootstrapping Language-Image Pre-training for Unified Vision (BLIP) model is being used as the caption generator (C) for artworks. Specifically, a BLIP Image Captioning Large model which uses the Bidirectional Encoder Representations from Transformers (BERT) model as the text encoder and the Vision Transformer- Language (ViT-L) model as the vision backbone. This is trained on 129 million images from the common objects in context (COCO), Visual Genome (VG), Conceptual Captions (CC), SBU, and LAION datasets. The BLIP model (caption generator) takes in the input artwork and gives us an output text that describes the artwork in a sentence as shown in FIG. 4A. Next, a sentence-transformer is used as the text encoder (T) for artwork captions. A 384-dimensional artwork representation $F_{caption}$ is obtained for each artwork. However, any image captioning model and text encoder may be used for generating captions and encoding respectively.

The second approach of generating the set of style-based artwork representations using style concepts is depicted as a block diagram in FIG. 4B. In the second approach, the set of style-based artwork representations are generated using a plurality of style concepts associated with each artwork. Initially artworks are annotated using the plurality of style concepts utilizing a vision language model. Artworks are annotated with style concepts based on the fundamental principles of art. A set of 59 different concepts across seven visual elements is used as shown in Table 1,

**Table 1**

| Visual Elements | Concept |
|---|---|
| Subject | Representational, Non-representational |
| Line | Blurred, Broken, Controlled, Curved, Diagonal, Horizontal, Vertical, Meandering, Thick, Thin, Active, Energetic, Straight |
| Texture | Bumpy, Flat, Smooth, Gestural, Rough |
| Color | Calm, Cool, Chromatic, Monochromatic, Muted, Warm, Transparent |
| Shape | Ambiguous, Geometric, Amorphous, Biomorphic, Closed, Open, Distorted, Heavy, Linear, Organic, Abstract, Decorative, Kinetic, Light |
| Light and Space | Bright, Dark, Medium, Atmospheric, Planar, Perspective |
| General Principles of Art | Overlapping, Balance, Contrast, Harmony, Pattern, Repetition, Rhythm, Unity, Variety, Symmetry, Proportion, Parallel |

Each style concept amongst the plurality of style concepts is associated with at least one visual element amongst a plurality of visual elements. Post annotation, the annotated artwork is encoded using any text encoder to obtain the set of style-based artwork representations. The generation of the set of style-based artwork representations for the artwork $a_i$ using style concept annotation is represented as,

$$F_{annotation} = T(S(a_i, taxonomy, instruction)) \qquad (2)$$

where, $S$ is the style concept annotator and T is the text encoder to encode the style concepts of an artwork. The style concept annotator considers the taxonomy given in Table 1 and the instruction is to associate the style concepts (for each visual elements) from the taxonomy to a given artwork $a_i$.

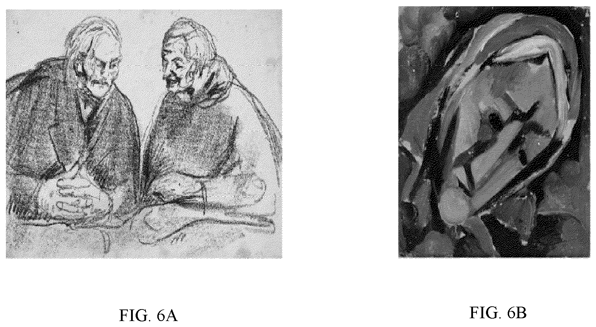

In an embodiment of the present disclosure, a Large Language and Vision Assistant (LLaVA) 1.5 model is leveraged as a style concept annotator (S). It is a large multi-modal model that combines the CLIP ViT-L vision encoder and the Vicuna 1.5 13B text encoder fine-tuned from the LLaMA model. LLaVa can be used for general purpose visual and language understanding tasks where given an image and a query, the model is able to answer the given query based on the image. A sentence-transformer as the text encoder (T) is used to obtain the 384-dimensional representation $F_{annotation}$ for each artwork. FIG. 6A and FIG. 6B, collectively referred as FIG. 6, illustrates artworks used for artwork style concept annotation using a vision language model in accordance with some embodiments of the present disclosure. Considering FIG. 6A depicts artworks with its respective style concept annotation with the LLaVA model. The style concept annotation for FIG. 6A artwork with the LLaVA model is provided as below,

**Subject:** representational
**Line:** blurred, controlled, meandering, thick, thin
**Texture:** smooth, gestural, rough
**Color:** monochromatic
**Shape:** ambiguous, biomorphic, organic, abstract, decorative
**Light and Space:** dark, planar, perspective
**General Principles of Art:** overlapping, balance, contrast, harmony, pattern, repetition
The style concept annotation for FIG. 6B artwork with the LLaVA model is provided as below,
**Subject:** representational, non-representational
**Line:** blurred, controlled, energetic, straight
**Texture:** smooth, gestural, rough

**Color:** cool, warm, muted, chromatic
**Shape:** ambiguous, organic, abstract, decorative
**Light and Space:** bright, dark, atmospheric, planar
**General Principles of Art:** balance, contrast, harmony, pattern, repetition, rhythm, unity, variety, symmetry, proportion, parallel.

As compared to the first approach of artwork caption, the style information available with the second approach is much more fine-grained across various artistic style dimensions. Any vision language model and sentence-transformer may be used for style concept annotation and encoding. The traditional image features such as those captured from convolutional neural networks do not capture the style present in the artwork images. Hence, the traditional image features are not a suitable choice to capture style present in the artworks. The style of an artwork can be rather subjective allowing the possibility to have multiple definitions. Multiple notions of style are found based on artist name, art genre, art movement, etc. Due to which it is non-trivial to capture or define style from the artworks.

Further at step 304 of the method 300, the one or more hardware processors are configured to generate a set of latent embedded features corresponding to each artwork using an autoencoder from the set of style-based artwork representations. Autoencoders are deep neural networks that can project the input data which is the set of style-based artwork representations into latent space using an encoder and reconstruct the original input from latent space using a decoder. The encoder transforms the set of style-based artwork representations into the set of latent embedded features with a non-linear mapping.

Finally, at step 306 of the method 300, the one or more hardware processors are configured to cluster the set of latent embedded features corresponding to each artwork based on a deep embedded clustering (DEC) with dynamic or static cluster initialization technique, to obtain a plurality of style clusters. Each artwork amongst the plurality of artworks is associated with each style cluster amongst the plurality of style clusters. The set of latent embedded features are provided to the clustering layer of the DEC as depicted in FIG. 2. The first step of clustering layer is to initialize clusters as shown in FIG. 2. This cluster initialization is done through k-means clustering in the DEC model. The k-means clustering is an unsupervised centroid-based clustering method that assigns each data point to a certain cluster (out of k clusters) based on the distance from the centroid. Cluster Initialization stage of the DEC model is modified from k-means clustering to affinity propagation. Affinity propagation creates a dynamic set of clusters by sending information between data points to decide which point should be the exemplar (centroid) of a particular cluster. This way of initialization eliminates the need for providing the number of clusters as input to the DEC model. However, the static cluster initialization technique may also be used to obtain the plurality of style clusters. In static cluster initialization technique, the number of clusters are pre-specified. The DEC model is used for clustering the set of latent embedded features to obtain the plurality of style clusters.

**EXPERIMENTAL RESULTS:** The present disclosure method is experimented with two datasets, WikiArt dataset and Edvard Munch archive. WikiArt is the largest collection of digitized artworks encompassing artists from several art movements which contains 78,978 artworks. While the WikiArt dataset has artworks from multiple artists, Edvard Munch archive is the artwork collection dedicated to a particular artist named Edvard Munch. There are 7411 artworks and the digitized artworks are available on the Munch Museum archive. The prior work named the DenseNet ($F_{dense}$) artwork representations-based clustering is applied to the above discussed artwork datasets to create the baseline for comparing the present disclosure. The first and second approach of the present disclosure ($F_{caption}$ and $F_{annotation}$) are applied to the same artwork datasets. The experiments are conducted with the DEC model where both k-means and affinity propagation as the alternative cluster initialization methods are used. Experiments are conducted on A100 GPU with 15 GB RAM and 5GB VRAM. The deep embedded clustering model is trained using Adam optimizer. The number of iterations is set to 8000 and the convergence threshold is set to 0.0001. The performance of the $F_{dense}$, $F_{caption}$ and $F_{annotation}$ are quantitatively evaluated using two metrics such as Silhouette Coefficient (SC) and Calinski Harabasz Index (CHI).

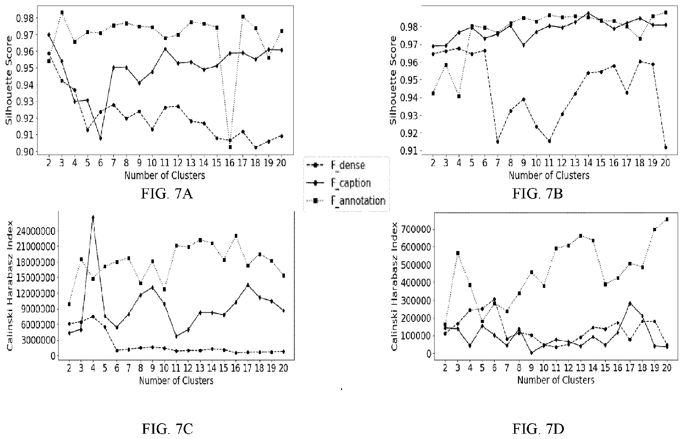

FIG. 7A, 7B, 7C and 7D, collectively referred as FIG. 7, illustrates experimental results for $F_{dense}$, $F_{caption}$ and $F_{annotation}$ for the WikiArt dataset and the Edvard Munch archive. The results are presented by varying K (number of clusters) from 2 to 20. It is observed that on the WikiArt dataset, apart from a few K values (K=2 and 16 for SC; K=4 for CHI), $F_{annotation}$ consistently outperforms the other two methods on both evaluation metrics. It signifies the importance of fine-grained style concepts in the artwork representations and the artistic style-based clustering of artworks. On the Edvard Munch archive, all three methods show a comparative performance on low values of K (i.e., K≤6). For higher values of K (i.e., K∈ [7,20]), $F_{annotation}$ outperforms $F_{dense}$ on both the metrics whereas $F_{caption}$ shows a comparative performance to $F_{annotation}$ on the SC metric but shows a poor performance on the CHI metric. It also indicates that the lower values of K are inappropriate to cluster the artworks of Edvard Munch who is known for his diverse artistic styles. The significance of fine-grained style concepts in $F_{annotation}$ is further highlighted in this experiment. Also, the coarse-grained style keywords in $F_{caption}$ also help improve the performance as compared to the DenseNet features for artworks.

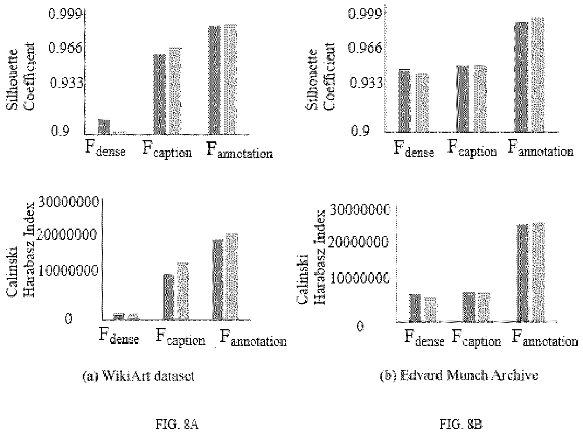

FIG. 8A and FIG. 8B, collectively referred as FIG. 8, illustrates experimental results for $F_{dense}$, $F_{caption}$ and $F_{annotation}$ with dynamic cluster initialization technique and k-means cluster initialization in accordance with some embodiments of the present disclosure. The number of clusters identified with affinity propagation is used as the K value in K-Means cluster initialization. For the WikiArt dataset, K=48 ($F_{dense}$), K=33 ($F_{caption}$), and K=41 ($F_{annotation}$). For the Edvard Munch archive, K=15 ($F_{dense}$), K=15 ($F_{caption}$), and K=13 ($F_{annotation}$). With this experiment, it is observed that on both datasets, replacing K-Means with affinity propagation results in comparative performance for all three methods on both metrics. It signifies that with a dynamic cluster initialization, competitive performance can be achieved which eliminates the need to provide the number of clusters as an input. With the affinity propagation on both datasets, it is observed that $F_{annotation}$ consistently outperforms the other two methods by a big margin on both metrics. It further strengthens that the fine-grained style concept helps in the effective clustering of artworks irrespective of the cluster initialization method. On the WikiArt dataset with affinity propagation, $F_{caption}$ outperforms $F_{dense}$ whereas on the Edvard Munch archive both the methods show similar performance. It signifies that on a smaller dataset (Edvard Munch archive) with high artistic style diversity, the coarse-grained style keywords in $F_{caption}$ struggle to provide the information needed for effective artwork clustering.

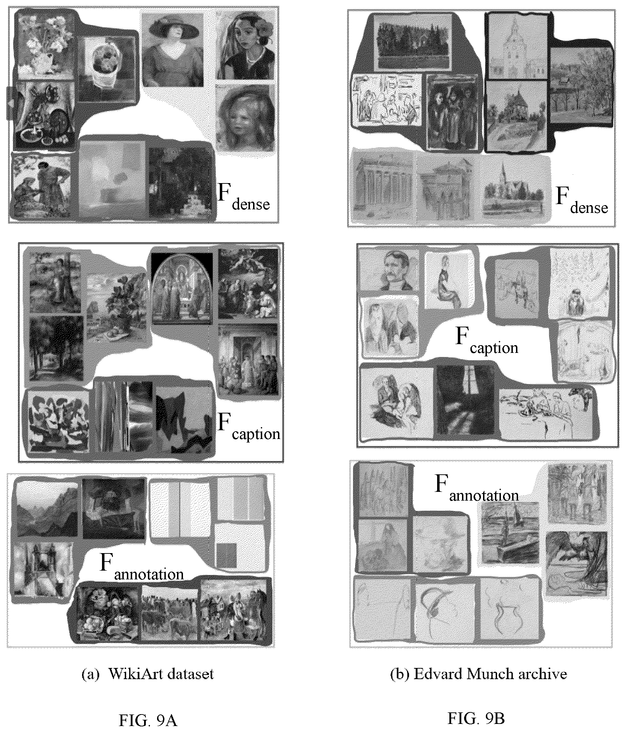

FIG. 9A and FIG. 9B, collectively referred as FIG. 9, illustrates experimental results of random samples from a few clusters obtained from various artwork datasets in accordance with some embodiments of the present disclosure. It is observed that the clusters with $F_{dense}$ tend to focus heavily on content similarity whereas the present disclosure style-based representations help to cluster artworks better based on the artistic style similarity. Further, for $F_{caption}$ clusters, there are more outliers present for the Edvard Munch archive compared to the WikiArt dataset. This reinforces that $F_{annotation}$ performs better than $F_{caption}$ for smaller datasets with artistically diverse styles.

The embodiments of present disclosure herein address unresolved problem of artwork clustering using style representations. The embodiment, thus provides the method for artistic style-based unsupervised clustering of artworks with natural language style annotations. Moreover, the embodiments herein further provide the method for generating style-based artwork natural language text representations from artworks using caption with style-based keywords and style concept annotator. The disclosed method leverages image captioning model, vision language model and text encoder for generating style-based artwork representations. Further the method clusters the artwork using deep embedded clustering with dynamic or static cluster initialization technique. In the method, the caption or style concept annotations are obtained initially from the artworks. Doing so ensures that the information captured from the artworks is style specific. This style information is then encoded into the style representation using the text encoder. In contrast, the image features obtained through convolutional neural networks do not guarantee that only the style specific information is encoded in the latent representation. The present disclosure method follows an extract-then-encode approach where the style information is extracted first and then encoded as compared to encode-then-extract approach in conventional approaches.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s)

## EP 4 672 041 A1

based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

### Claims

1. A processor implemented method (300) comprising:

   generating, via one or more hardware processors, a set of style-based artwork representations for each artwork amongst a plurality of artworks based on at least one of (i) a caption with a plurality of style keywords, or (ii) a plurality of style concepts associated with each artwork (302);
   generating, via the one or more hardware processors, a set of latent embedded features corresponding to each artwork using an autoencoder from the set of style-based artwork representations (304); and
   clustering, via the one or more hardware processors, the set of latent embedded features corresponding to each artwork based on a deep embedded clustering with cluster initialization technique, to obtain a plurality of style clusters, wherein each artwork amongst the plurality of artworks is associated with each style cluster amongst the plurality of style clusters (306).

2. The processor implemented method (300) as claimed in claim 1, wherein generating the set of style-based artwork representations based on the caption with the plurality of style keywords for each artwork comprises:

   generating, via the one or more hardware processors, the caption comprising the plurality of style keywords, associated with the artwork using an image captioning model; and
   encoding, via the one or more hardware processors, the caption using a text encoder to obtain the set of style-based artwork representations.

3. The processor implemented method (300) as claimed in claim 1, wherein generating the set of style-based artwork representations based on the plurality of style concepts for each artwork comprises:

   annotating the artwork, via the one or more hardware processors, using the plurality of style concepts utilizing a vision language model; and
   encoding, via the one or more hardware processors, the annotated artwork using the text encoder to obtain the set of style-based artwork representations.

4. The processor implemented method (300) as claimed in claim 3, wherein each style concept amongst the plurality of style concepts is associated with at least one visual element amongst a plurality of visual elements.

5. The processor implemented method (300) as claimed in claim 4, wherein at least one visual element corresponds to any one of (i) a subject, (ii) a line, (iii) a texture, (iv) a color, (v) a shape, (vi) a light and space, or (vii) a set of general principles of art.

6. A system (100), comprising:

   a memory (104) storing instructions;

one or more communication interfaces (106); and
one or more hardware processors (102) coupled to the memory (104) via the one or more communication interfaces (106), wherein the one or more hardware processors (102) are configured by the instructions to:

generate a set of style-based artwork representations for each artwork amongst a plurality of artworks based on at least one of (i) a caption with a plurality of style keywords, or (ii) a plurality of style concepts associated with each artwork;
generate a set of latent embedded features corresponding to each artwork using an autoencoder from the set of style-based artwork representations; and
cluster the set of latent embedded features corresponding to each artwork based on a deep embedded clustering with cluster initialization technique, to obtain a plurality of style clusters, wherein each artwork amongst the plurality of artworks is associated with each style cluster amongst the plurality of style clusters.

7. The system (100) as claimed in claim 6, wherein generating the set of style-based artwork representations based on the caption with the plurality of style keywords for each artwork comprises:

generating the caption comprising the plurality of style keywords, associated with the artwork using an image captioning model; and
encoding the caption using a text encoder to obtain the set of style-based artwork representations.

8. The system (100) as claimed in claim 6, wherein generating the set of style-based artwork representations based on the plurality of style concepts for each artwork comprises:

annotating the artwork using the plurality of style concepts utilizing a vision language model; and
encoding the annotated artwork using the text encoder to obtain the set of style-based artwork representations.

9. The system (100) as claimed in claim 8, wherein each style concept amongst the plurality of style concepts is associated with at least one visual element amongst a plurality of visual elements.

10. The system (100) as claimed in claim 9, wherein at least one visual element corresponds to any one of (i) a subject, (ii) a line, (iii) a texture, (iv) a color, (v) a shape, (vi) a light and space, or (vii) a set of general principles of art.

11. One or more non-transitory machine-readable information storage mediums comprising one or more instructions which when executed by one or more hardware processors cause:

generating a set of style-based artwork representations for each artwork amongst a plurality of artworks based on at least one of (i) a caption with a plurality of style keywords, or (ii) a plurality of style concepts associated with each artwork;
generating a set of latent embedded features corresponding to each artwork using an autoencoder from the set of style-based artwork representations; and
clustering the set of latent embedded features corresponding to each artwork based on a deep embedded clustering with cluster initialization technique, to obtain a plurality of style clusters, wherein each artwork amongst the plurality of artworks is associated with each style cluster amongst the plurality of style clusters.

12. The processor implemented method as claimed in claim 11, wherein generating the set of style-based artwork representations based on the caption with the plurality of style keywords for each artwork comprises:

generating the caption comprising the plurality of style keywords, associated with the artwork using an image captioning model; and
encoding the caption using a text encoder to obtain the set of style-based artwork representations.

13. The processor implemented method as claimed in claim 11, wherein generating the set of style-based artwork representations based on the plurality of style concepts for each artwork comprises:

annotating the artwork using the plurality of style concepts utilizing a vision language model; and
encoding the annotated artwork using the text encoder to obtain the set of style-based artwork representations.

14. The processor implemented method as claimed in claim 13, wherein each style concept amongst the plurality of style concepts is associated with at least one visual element amongst a plurality of visual elements.

15. The processor implemented method as claimed in claim 14, wherein at least one visual element corresponds to any one of (i) a subject, (ii) a line, (iii) a texture, (iv) a color, (v) a shape, (vi) a light and space, or (vii) a set of general principles of art.

FIG. 1

FIG. 2

300

Generating a set of style-based artwork representations for each artwork amongst a plurality of artworks based on at least one of (i) a caption with a plurality of style keywords, or (ii) a plurality of style concepts associated with each artwork ⟋302

Generating a set of latent embedded features corresponding to each artwork using an autoencoder from the set of style-based artwork representations ⟋304

clustering the set of latent embedded features corresponding to each artwork based on a deep embedded clustering with cluster initialization technique, to obtain a plurality of style clusters ⟋306

FIG. 3

FIG. 4A

FIG. 4B

(a) a **portrait** of a man reading
a book

FIG. 5A

(b) **painting** of a group of men

FIG. 5B

(c) a **landscape** with trees

FIG. 5C

(d) a **drawing** of a man and a woman sitting at
a table

FIG. 5D

FIG. 6A

FIG. 6B

FIG. 7A

FIG. 7B

FIG. 7C

FIG. 7D

(a) WikiArt dataset

(b) Edvard Munch Archive

FIG. 8A

FIG. 8B

(a) WikiArt dataset

FIG. 9A

(b) Edvard Munch archive

FIG. 9B

EUROPEAN SEARCH REPORT

**Application Number**

EP 25 18 4255

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG LANXIAO ET AL: "TridentCap: Image-Fact-Style Trident Semantic Framework for Stylized Image Captioning", IEEE TRANSACTIONS ON CIRCUITS AND SYSTEMS FOR VIDEO TECHNOLOGY, IEEE, USA, vol. 34, no. 5, 12 September 2023 (2023-09-12), pages 3563-3575, XP011970055, ISSN: 1051-8215, DOI: 10.1109/TCSVT.2023.3315133 [retrieved on 2023-09-13] Section III; * abstract; figures 1,2 * ----- | 1-15 | INV. G06F18/23 G06V10/762 G06V10/82 |
| Y | SEAN YANG ET AL: "MultiDEC: Multi-Modal Clustering of Image-Caption Pairs", ARXIV.ORG, CORNELL UNIVERSITY LIBRARY, 201 OLIN LIBRARY CORNELL UNIVERSITY ITHACA, NY 14853, 4 January 2019 (2019-01-04), XP081012080, Section 1, 3; * abstract; figure 1 * ----- | 1-15 | |
| | | | TECHNICAL FIELDS SEARCHED (IPC) |
| A | DOBLER KONSTANTIN ET AL: "Art Creation with Multi-Conditional StyleGANs", PROCEEDINGS OF THE THIRTY-FIRST INTERNATIONAL JOINT CONFERENCE ON ARTIFICIAL INTELLIGENCE, 1 July 2022 (2022-07-01), pages 4936-4942, XP093314658, California DOI: 10.24963/ijcai.2022/684 ISBN: 978-1-956792-00-3 * the whole document * ----- | 1-15 | G06F G06V |

-/--

The present search report has been drawn up for all claims

| Place of search | Date of completion of the search | Examiner |
|---|---|---|
| The Hague | 15 September 2025 | Meurisse, Wim |

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 18 4255

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHARMA DHRUV ET AL: "Control With Style: Style Embedding-Based Variational Autoencoder for Controlled Stylized Caption Generation Framework", IEEE TRANSACTIONS ON COGNITIVE AND DEVELOPMENTAL SYSTEMS, IEEE, vol. 16, no. 6, 29 May 2024 (2024-05-29), pages 2032-2042, XP011989987, ISSN: 2379-8920, DOI: 10.1109/TCDS.2024.3405573 [retrieved on 2024-05-30] Section II, III; * abstract; figures 2,3 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 15 September 2025 | Meurisse, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- IN 202421049444